(19)

**Europäisches Patentamt**

**European Patent Office**

**Office européen des brevets**

(11) **EP 3 375 557 B1**

(12) **EUROPEAN PATENT SPECIFICATION**

(45) Date of publication and mention
of the grant of the patent:
**23.08.2023 Bulletin 2023/34**

(21) Application number: **17161178.3**

(22) Date of filing: **15.03.2017**

(51) International Patent Classification (IPC):
**B23H 9/00** *(2006.01)* **A61C 5/42** *(2017.01)*
**B23H 1/00** *(2006.01)*

(52) Cooperative Patent Classification (CPC):
**B23H 9/00; A61C 5/42;** B23H 1/00

(54) **METHOD FOR PRODUCING BLANKS FOR ENDODONTIC INSTRUMENTS, AND SUCH BLANKS**

VERFAHREN ZUR HERSTELLUNG VON ROHLINGEN FÜR ENDODONTISCHE INSTRUMENTE
SOWIE DERARTIGE ROHLINGE

PROCÉDÉ DE FABRICATION D'ÉBAUCHES POUR INSTRUMENTS D'ENDODONTIE ET DE
TELLES ÉBAUCHES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**19.09.2018 Bulletin 2018/38**

(73) Proprietor: **Coltène/Whaledent GmbH + Co. KG
89129 Langenau (DE)**

(72) Inventor: **MANNSCHEDEL, Werner
89129 Langenau (DE)**

(74) Representative: **Hepp Wenger Ryffel AG
Friedtalweg 5
9500 Wil (CH)**

(56) References cited:
**EP-A- 0 076 997 EP-A1- 3 156 163
US-A- 3 762 243 US-A1- 2004 171 333
US-A1- 2005 100 859 US-A1- 2006 185 169
US-A1- 2016 206 401**

- **YANZHEN ZHANG ET AL: "Study of the recast
layer of a surface machined by sinking electrical
discharge machining using water-in-oil emulsion
as dielectric", APPLIED SURFACE SCIENCE,
ELSEVIER, AMSTERDAM , NL, vol. 257, no. 14, 19
January 2011 (2011-01-19), pages 5989-5997,
XP028368502, ISSN: 0169-4332, DOI:
10.1016/J.APSUSC.2011.01.083 [retrieved on
2011-01-26]**

## Description

The invention relates to methods for producing blanks for endodontic instruments.

Dentists use various types of endodontic instruments to clean and widen root channels. The dentist typically accesses the root channel through the surface of a tooth that is to be treated. Thereafter, the root channel is cleaned and widened with endodontic instruments such as files or rasps. The root channel that has been prepared in this way is filled with a filling material by the dentist and is finally sealed.

For the working of the root channel, the dentist has access to a range of flexible files that each have a handle. The files have different diameters for cleaning and widening the root canal successively. Along the length of the endodontic instrument there are typically helical and non-helical grooves or channels and cutting edges which ensure a cutting action.

Conventional endodontic instruments are produced by means of a bar being continuously twisted. In this way, cutting edges form on the surface. Alternatively, endodontic instruments are produced by means of a rod being machined in a rotating grinder. In this way, helical and non-helical grooves or notches and cutting edges are introduced along the length of the instrument. Said methods are time-consuming and cost-intensive, and only a limited number of surface configurations can be produced.

US 6,149,501 describes a method for producing superelastic endodontic instruments, wherein a blank is present in the austenite phase of the material before being twisted. The material changes to the martensite phase during the twisting. The method comprises work steps carried out at high temperature and in liquids, which also have corroding effects on the material. The method is therefore associated with a number of disadvantages.

US 7,207,111 B2 describes methods for producing endodontic instruments, wherein helical grooves or notches and cutting edges are formed by twisting at low temperature. Grooves or notches and cutting edges can also be introduced into the endodontic instrument by means of electrical discharge machining (EDM). Eroded material deposits again onto the instrument and has a hardness that is at least 15% greater than the hardness of the starting material. This has proven mechanically disadvantageous during the use of the instrument.

US 2016 206 401 A1 describes a method for producing a blank according to the preamble of claim 1.

An object of the invention is to overcome the disadvantages of the prior art. In particular, it is an object of the invention to provide a method for producing blanks for endodontic instruments, by which method the blanks can be produced rapidly and cost-effectively and with advantageous properties in terms of stability and functionality.

This object is solved by the features of the independent claim. An erosion pattern is applied to the at least one rod during the wire erosion process. The material, which is eroded away from the at least one rod, does not deposit again on the at least one rod. Thus, the at least one rod does not comprise a layer of re-deposited material.

The eroded material is substantially removed, e.g. by suctioning, before the eroded material re-deposits on the rod during the machining by erosion. This may for instance be achieved by a flowing dielectric medium, and/or a combination of ultrasonic machining and EDM machining. Furthermore, adjustments in current and pulstime and also powder additives are influencing the rate of redeposition of the eroded material.

Preferably, the rod or rods rods used for the above methods have a length in the range of 1 to 15 m, more preferably 2 to 10 m, particularly preferably 3 to 4 m. The rod or rods used can also be hollow rods (tubes). In the finished endodontic instrument, liquid, in particular flushing liquid, can in this way be introduced centrally into the root channel.

The material of the rods can be chosen from the following materials: $\alpha$-titanium alloys; $\beta$-titanium alloys; $\alpha,\beta$-titanium alloys; nickel-titanium alloys, in particular stoichiometric NiTi alloys or approximately equiatomic NiTi alloys, for example 50.8%Ti/49.2%Ni, 46% Ti/54% Ni. NiTi alloys can also contain additives chosen from the group consisting of niobium, copper, chromium, cobalt, hafnium, vanadium and palladium. A proportion of at least 40 atomic percent Ti is in any case preferred. With materials of this kind, both the blank and the finished endodontic instrument have superelastic properties.

In the context of the invention, the surface hardness is determined in particular by the nanoindentation method. Here, an indenter is pressed with a certain force into the material. The remnant depth ratio (RDR) is used for the evaluation. This describes the ratio of the remaining penetration depth $h_{ver}$ to the maximum penetration depth $h_{max}$:

$$RDR = \frac{h_{ver}}{h_{max}}$$

In the machining by means of electrical discharge machining, wire electrical discharge machining or electrical discharge grinding, at least one further erosion pattern can be applied to the at least one rod. The at least one further erosion pattern is here designed such that it generates a different effect, in particular a different cutting effect, than the first erosion pattern during the intended use of the endodontic instrument. The second erosion pattern can in particular be configured reciprocally to the first erosion pattern. Accordingly, the first erosion pattern or the cutting edges thereof perform(s) a cutting function upon insertion into a root canal, and the second erosion pattern or the cutting edges thereof perform(s) a cutting function upon removal from a root channel, i.e. during the movement in the opposite direction.

The root channel is efficiently cleaned and widened in this way. In particular, for example, two or three edges, in particular cutting edges, can be provided which perform a cutting action during the advance movement, i.e. upon insertion into the root channel, and one edge, in particular one cutting edge, which performs a cutting action during the reverse movement. In this way, the instrument is subject to less mechanical stress during the reverse movement. Of course, other numbers of edges, in particular of cutting edges, are also conceivable.

Advantageously, several rods can be eroded simultaneously in the above methods. In this way, the production process is accelerated and the production costs are lowered.

After the step of machining the one or more rods by means of erosion, in which step an erosion pattern is applied to the one or more rods, or after the step of removing the layer of re-deposited material a secondary treatment of the one or more rods can take place. This can be done by electropolishing, chemical polishing, heat treatment for adjusting the elasticity and/or hardness, or application of a coating, in particular comprising diamond-like carbon (DLC) and/or boron nitride. The aforementioned secondary treatments can be carried out individually or in combination. In principle, any type of secondary treatment can be used that leads to a change in the properties of the blank, in particular of the cutting edges of the blank.

Of course, the one or more rods can also be pre-treated before being supplied for the method. Typical pretreatments of the one or more rods serve to clean and/or inactivate the surface. In this way, it is possible to improve the deposition of the eroded material in the method according to the invention onto the one or more rods.

After the step of machining the one or more rods by erosion, in which step an erosion pattern is applied to the one or more rods, or after the step of removing the layer of re-deposited material the at least one rod or the several rods can be cut into lengths. In this way, the blank is brought to the length required for the intended use and is further processed to give an endodontic instrument. In the simplest case, the further processing can simply entail the attachment of a handle. More extensive machining (for example twisting) of the actual endodontic active region is no longer necessary, as a result of which the method is considerably simplified.

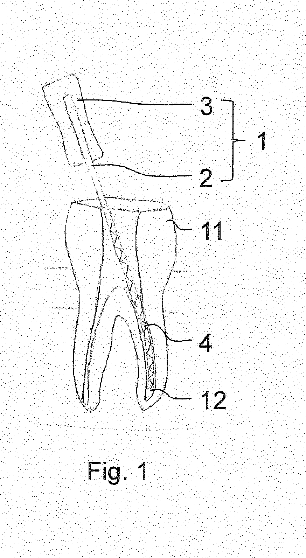

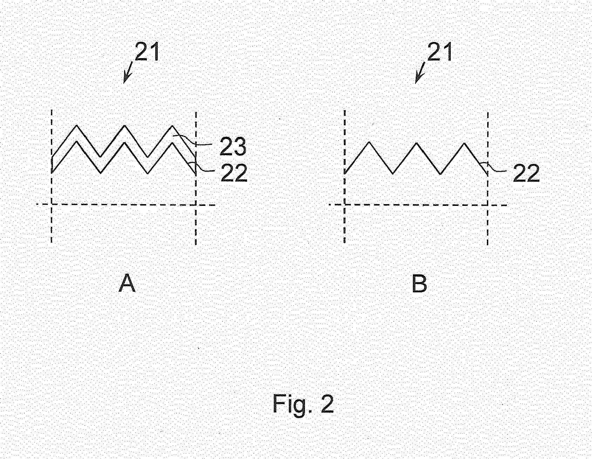

The invention is explained below with reference to the figures 1 and 2 and on the basis of measurement results.

Figure 1    shows a schematic view of an endodontic instrument in the root canal of a tooth;

Fiugure 2    shows a schematic view of a section of a blank.

Figure 1 shows an endodontic instrument 1 during the treatment of a molar 11. Here, the endodontic instrument 1 is partially inserted into a root channel 12 of the tooth 11. By means of movements of rotation and translation, the root canel 12 is cleaned, i.e. the dentin removed from the root canel 12, and widened. The endodontic instrument 1 comprises a handle 3 and a body 2. The body 2 is produced from a nickel-titanium alloy and has at least one erosion pattern 4. The erosion pattern 4 was introduced in a wire erosion method. The erosion pattern 4 is formed here, inter alia, by the deposition of eroded material. The erosion pattern 4 has cutting edges, which perform a cutting function during the intended use.

Figure 2 shows a schematic view of a section of a blank 21 not according the invention. The blank 21 has a surface pattern 22, which was formed in a machining process by wire erosion. The surface of the blank 21 comprises a layer of re-deposited material 23, which was formed by material eroded away from the blank 21 and deposited on the blank 21 during the machining by wire erosion (fig. 2, ref. A).

The layer of re-deposited material 23 may be removed resulting in a blank having a surface pattern 22 and lacking a layer of re-deposited material (fig. 2, ref. B).

According to the invention no material, which is eroded away from the blank 21, is deposited on the blank 21 during the machining by wire erosion. The latter also results in a blank as shown in fig 2, ref. B.

The hardness of the instruments was defined by the nanoindentation method (maximum forces 10 mN and 30 mN). The remnant depth ratio (RDR) was determined for the evaluation, likewise $h_{max}$, $h_{ver}$ and the elastic modulus. In workpieces according to the invention, no significant difference in hardness could be identified between areas treated by EDM and areas not treated by EDM. In the endodontic application, instruments according to the invention showed excellent and homogeneous properties of bending and elasticity, without any cracking of surface material, even under intensive and prolonged stress.

**Claims**

1.  A method for producing blanks (21) for endodontic instruments (1), wherein the blank (21) has a plurality of cutting edges and flutes having a non-directional surface finish, and wherein the blank (21) has a homogenous hardness over the cross-section of the blank (21) comprising the steps of

    i) providing at least one rod;
    ii) machining the at least one rod by means of erosion, selected from the group consisting of electrical discharge machining, wire electrical discharge machining, electrical discharge grinding, wherein an erosion pattern (4) is applied to the at least one rod,

    wherein the blank has a uniform hardness, in cross section ; **characterised in that** the material eroded away from the at least one rod does not deposit again on the at least one rod.

## Patentansprüche

1. Verfahren zur Herstellung von Rohlingen (21) für endodontische Instrumente (1), wobei der Rohling (21) eine Vielzahl von Schneidkanten und Nuten mit einer ungerichteten Oberflächenbeschaffenheit aufweist, und wobei der Rohling (21) eine homogene Härte über den Querschnitt des Rohlings (21) aufweist, umfassend die Schritte

   i) Bereitstellen mindestens eines Stabes;
   ii) Bearbeiten des mindestens einen Stabes mittels Erosion, ausgewählt aus der Gruppe bestehend aus Funkenerosion, Drahterosion, Funkenerosionsschleifen, wobei ein ungerichtetes Erosionsmuster (4) auf den mindestens einen Stab aufgebracht wird,

   wobei der Rohling im Querschnitt eine gleichmäßige Härte aufweist, **dadurch gekennzeichnet, dass** sich das von dem mindestens einen Stab abgetragene Material nicht wieder auf dem mindestens einen Stab ablagert.

## Revendications

1. Procédé de fabrication d'ébauches (21) pour instruments endodontiques (1), dans lequel l'ébauche (21) comporte plusieurs arêtes et flutes de coupe ayant un finissage de surface non directionnel, et dans lequel l'ébauche (21) présente une dureté homogène sur la section transversale de l'ébauche (21), comprenant les étapes suivantes

   i) fournir au moins une tige;
   ii) l'usinage de l'au moins une tige au moyen d'un procédé d'érosion, choisi dans le groupe constitué de l'usinage par décharge électrique, de l'usinage par décharge électrique à fil, du meulage par décharge électrique, dans lequel un modèle d'érosion non directionnel (4) est appliqué à l'au moins une tige,

   dans lequel l'ébauche présente une dureté uniforme en coupe transversale; **caractérisé par le fait que** la matière érodée de l'au moins une tige ne se dépose pas à nouveau sur l'au moins une tige.

Fig. 1

Fig. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6149501 A
- US 7207111 B2

- US 2016206401 A1